Europäisches Patentamt

European Patent Office

Office européen des brevets

(11) Publication number: **0 428 328 A1**

# EUROPEAN PATENT APPLICATION

(21) Application number: 90312205.9

(22) Date of filing: 08.11.90

(51) Int. Cl.⁵: **G06F 15/80**

(30) Priority: 14.11.89 GB 8925720

(43) Date of publication of application:
22.05.91 Bulletin 91/21

(84) Designated Contracting States:
AT BE CH DE DK ES FR GB GR IT LI LU NL SE

(71) Applicant: AMT(HOLDINGS) LIMITED
65 Suttons Park Avenue
Reading Berkshire RG6 1AZ(GB)

(72) Inventor: **Hunt, David John**
3 Moores Green
Wokingham, Berkshire, RG11 1QG(GB)

(74) Representative: **Rackham, Stephen Neil et al**
**GILL JENNINGS & EVERY 53-64 Chancery**
**Lane**
**London WC2A 1HN(GB)**

(54) **Processor array system.**

(57) A processor array comprises a plurality of processing elements. Each processing element (PE,CP) includes a local store, an arithmetic unit (ALU) and an operand register for the arithmetic unit. The array employs an SIMD architecture. The arithmetic unit (ALU) is a byte-wide processor and the operand register includes a multi-byte shift network. Data outputs are provided for each byte of the shift network and a multiplexer (MUX) communicates data from a selected one of the outputs to the arithmetic unit.

In one example the processing elements including the byte-wide processor are used as co-processors for an array of corresponding single-bit processing elements.

Fig.1.

## PROCESSOR ARRAY SYSTEM

The present invention relates to parallel processing computer systems, and in particular to a system comprising an array of processing elements employing an SIMD architecture. One example of such a system is described and claimed in GB-A-1445714, assigned to the present applicant.

According to a first aspect of the present invention, there is provided a processor array comprising a plurality of processing elements, each processing element including a local store, an arithmetic unit and operand register means for the arithmetic unit, the array employing an SIMD architecture, characterised in that the arithmetic unit is a byte-wide processor, and the operand register means include a multi-byte shift network, data outputs for each byte of the shift-network, and a multiplexer arranged to communicate data from a selected one of the outputs to the arithmetic unit.

Conventionally SIMD processors have used large numbers of very simple processors in order to obtain flexibility in use together with high levels of integration. The processing elements of such an array has been arranged to operate on single bits only. The present invention, by contrast, provides processing elements in which the arithmetic unit is able to operate on entire bytes, the byte being typically eight bits wide. The processing element is arranged so that operands comprising multiple-bytes or part-bytes are handled without any significant loss of efficiency. This enables the use of far wider data paths within the processing element giving a marked increase in the power of the array as a whole. At the same time the structure of the processing elements of the present invention remains sufficiently simple to retain the high levels of integration and flexibility of operation which are the primary design goals.

Preferably the operand register means include a first multi-byte shift network arranged to shift data byte-wise from one end to the other and a second multi-byte shift network connected in parallel with the first shift network and arranged to shift data bit-wise from one end to the other. Preferably the first shift network is arranged to receive a byte output from the arithmetic unit at the one end and the second shift register is arranged to receive a carry-bit output from the arithmetic unit at the one end and to output data to a multiplier register at the other end. Preferably the operand register means further comprise an output register connected in parallel with the second shift network, a data output at each byte position of the output register being connected in common to a corresponding data input of the first shift network and to an input of the multiplexer.

The multiplier register is a byte-wide shift register connected between the local store of each processing element and the data input to the arithmetic unit. The shift networks are typically formed from 2:1 or 4:1 multiplexers. The processing element is arranged to function using shift options of 0,1,8 or 9 places (for the case of an 8-bit wide processor). It therefore avoids the need for the complex logic necessary to shift any arbitrary number of places.

The preferred aspects of the present invention provide a structure for the processing element which maximises the advantages to be gained by use of the byte-wide arithmetic unit. In particular the use of a pair of shift-networks in the operand register means with an output from the bit-wise shift network taken to a further operand register, the multiplier register, considerably enhances the performance of the processing element in carrying out arithmetical functions on byte or multi-byte operands.

Preferably the arithmetic unit includes a mask input arranged to receive a mask bit pattern, the arithmetic unit operating on a selected bit or bits of a byte-wide operand in response to the mask bit pattern.

The use of masking in the arithmetic unit allows the unit to operate on any selected bit field rather than being constrained to byte boundaries.

Preferably the processing element includes a byte-wide input for data from local store and a bit-wide input for off-chip memory.

Preferably the array comprises a number of sub-arrays, each sub-array comprising n processing elements and having an n-bit path to a sub-array memory. Preferably each sub-array memory is locally indexed.

The use of sub-array off-chip memories is described in further detail in our co-pending application filed this day, also entitled Processor Array System claiming priority from our earlier British application number 8925721.6.

According to a second aspect of the present invention there is provided a processor array comprising a plurality of single-bit processing elements, the array employing an SIMD architecture, characterised in that the array further comprises a plurality of co-processing elements, one coprocessing element being provided for each processing element of the array, each processing element and coprocessing element addressing a common region of array memory, each co-processing element including a local store, a byte-wide arithmetic unit and operand register means for the arithmetic unit.

A processor array in accordance with the present invention will now be described in further detail with reference to the accompanying drawings in which:

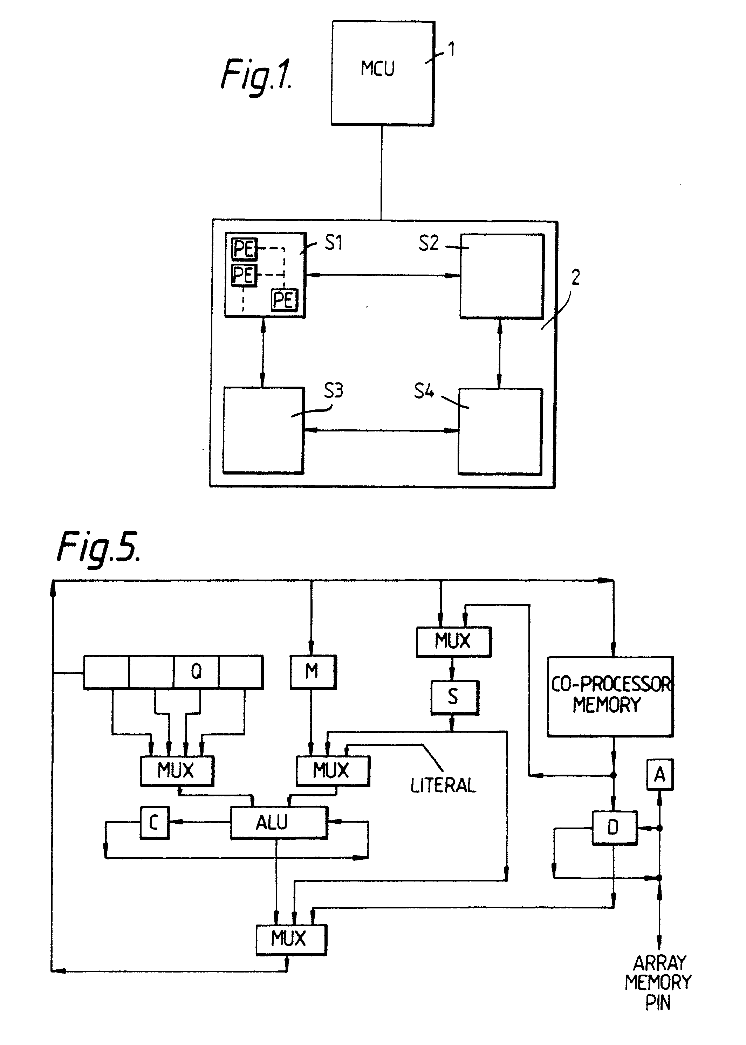

Figure 1 is a block diagram of a processor array system;

Figure 2 is a diagram of a processing element for use in the system of Figure 1;

Figure 3 shows the configuration of the memory interface for a single sub-array;

Figure 4 is a block diagram of an alternative embodiment; and

Figure 5 is a diagram of a processing element for use in the system of Figure 4.

A processor array system comprises a control unit 1 and an array 2 of processing elements. The array 2 comprises a number of modules S1-S4 each module being formed on a separate chip. In the present example each module S1-S4 comprises 32 processing elements PE. Each module has on-chip memory and also has associated with it a block of off-chip memory.

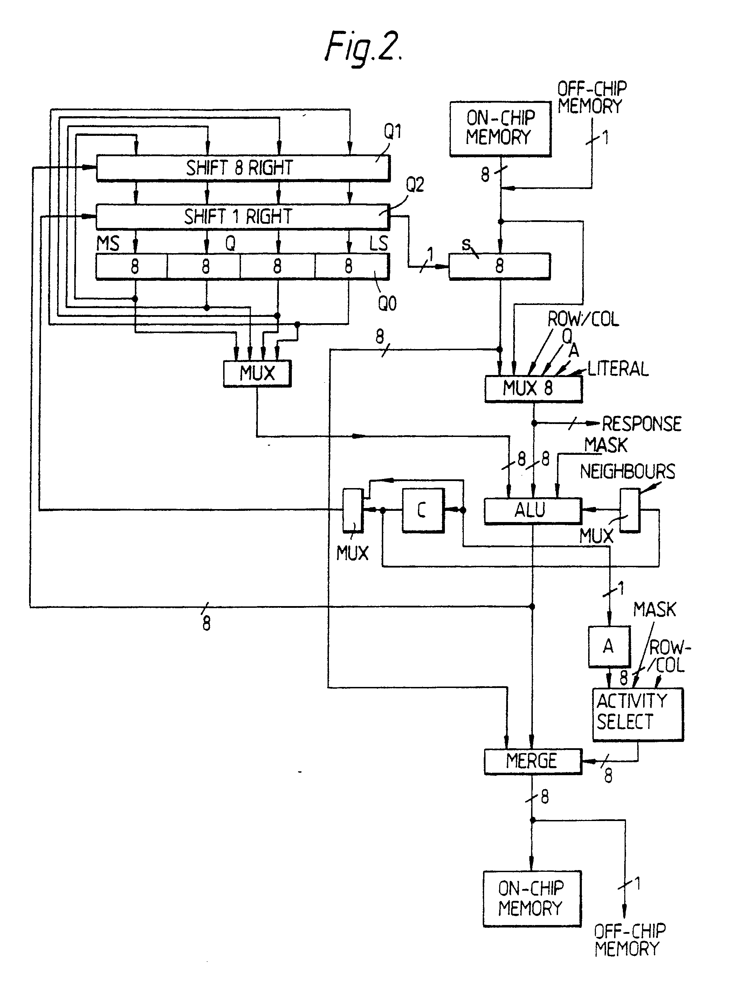

The structure of one processing element is shown in Figure 2. The processing element is arranged to operate on a byte of 8 bits. The processing element includes an 8 bit wide arithmetic unit ALU and 8 bit wide data paths for carrying data between the arithmetic unit ALU and on-chip memory. As described in further detail below, the processing element further includes a four byte wide 32 bit operand shift network Q comprising a byte-wise shift network Q1, a bit-wise shift network Q2 and an output register Q0. The shift networks are formed from appropriately interconnected 2:1 multiplexers. Alternatively, as in the embodiment described below, a single 4 to 1 multiplexer may be used to implement the functions of both the Q1 and Q2 shift networks. The output from each byte position of the output register Q0 is connected to the corresponding input of the byte-wise shift network Q1 to provide a cyclical data path. Another connection from each output of the output register Q0 goes to a multiplexer MUX which is linked by a byte-wide data path to an input of the arithmetic unit ALU to communicate data from a selected one of the four byte positions of the operand shift network Q. The output of the arithmetic unit ALU is input at one end of the byte-wise shift network QI and the single bit carry-output of the arithmetic unit ALU is input at one end of the bit-wise shift network Q2. The data output from the other end of the bit-wise shift register Q2 is taken via a bit-wide data path to one end of an 8-bit shift register S, the "multiplier" register.

The different elements of the processing element PE and examples of the use of the processing element PE in carrying out arithmetic operations are described in further detail below.

Memory Paths

On chip memory is organised as 8 bits wide and a byte might be read or written in one clock cycle but not both in the same cycle. In practice it is convenient to have at least 512 bits of on-chip memory per PE. For clarity, the on-chip memory is omitted from Figure 2. The read port of the on-chip memory is shown at the top of the figure, and the write port at the bottom.

The PE data paths for the least significant bit are substantially the same as in conventional single-bit processing elements, such as those described in the above cited patent. However for a full set of single-bit operations on the on-chip memory the following additional functions are necessary;

1. On the read port, option to select any bit of the on-chip memory byte and place it on the least significant bit. The other bits on the PE input can be regarded as undefined.

2. On the write port, option to replicate the least significant bit of the ALU output in all the bits. Alternatively this replication may be done in the ALU itself.

3. Option to write just one bit of the byte into on-chip memory. Preferably this is done by gating the writes to individual bits; it may alternatively be done as read-merge-write but this takes longer.

These additional functions listed above are equivalent to providing single-bit access (as well as byte access) to the on-chip memory. In general the bit address used for accessing the memory is different from that used for masking the ALU, since for single bit operation it is always the least significant bit of the ALU that is used.

A one bit wide path from off-chip memory is multiplexed with the least significant bit of the on-chip memory, the other bits as being "dont care" in this case. Similarly, off-chip memory may be written from the least significant bit of the on-chip memory write path.

Q Register

As described above, in the present example the Q register is a 32 bit wide register with shift facilities. In general the length of the Q register may be, but is not necessarily, matched to the word length of the operands. If, for example, the PE is required to process 48-bit words then Q is preferably at least 48 bits long. Any word length shorter than the register length can be implemented directly so that, e.g., code written for a 24-bit multiply works unchanged with a Q register of 24, 32 or 64 bit length. Word lengths longer than the register can be handled provided that the software partitions the words appropriately. The Q register operates like a specialised on-chip memory with simultaneous read and write ports.

It is possible to construct the Q register so that only the least significant byte of the register is used as an ALU operand but input can be made at any byte position. In practice however it is found to be more useful to be able to select any byte as ALU operand but to restrict input to one byte of the register. The Q register may considered to be of length 8, 16, 24 or 32 bits. When emulating the instruction set of existing single-bit arrays, the least significant bit of the most significant byte is used.

The current outputs of the Q register pass in succession through two shift networks:

1. An optional right shift of 8 bits (1 byte) with the ALU output fed in at the MS end. It may be useful also to be able to input the ALU data at the MS byte and pass the other bytes unchanged.

2. An optional right shift of one bit with either the ALU carry output or the value of the C register fed in at the MS end. When this is done, the bit shifted out on the right is available to shift in to the S register, i.e. the multiplier register.

The output of the second shifter is always clocked into the Q register. The two shifts may be applied separately or together and either or both may be global or under local activity control.

## S Register (Multiplier Register)

The S register is an 8-bit shift register used to hold "old" memory contents for read/write. It is also available as a programmer-visible register used in particular in multiplioation. It may be shifted one bit to the right, usually as an extension to the Q register. The least significant bit may be used as a multiplier bit.

## Neighbour Input Multiplexer

In general, each processing element will have a data input from each of its four nearest neighbours. The input in general will be one bit wide. The neighbour input multiplexer is not part of the general input multiplexer for each PE as in previous single bit PE designs, but is moved to the carry-in of the arithmetic unit, where the neighbour values are multiplexed with the single bit C register. This arrangement gives greater flexibility of carry propagation than in single bit PEs.

## Input Multiplexer

The general input multiplexer functions in a fashion similar to that used in earlier 1-bit arrays, such as that described and claimed in co-pending British application no. 8829622.3 assigned to the present applicant. The multiplexer provides the following options;

1. Q Register. The least significant bit of a selected byte of the Q register on the least significant bit, and zero, i.e. no input, on the other bits. The byte selected for this purpose is the same as is selected for the other ALU input. For response instructions, the most significant byte of Q will normally be used.

2. A register. The inverse of the one-bit register on the least significant bit and zero (i.e. no input) on the other bits. The inverse rather than the non-inverted value is used.

3. Memory input. This is 8-bit data from the on-chip memory read port including the options of either off-chip memory data or a selected bit of the on-chip memory byte, on the least significant bit.

4. S Register. 8 Bits.

5. Row/Column data from the MCU. The least significant bit receives single bit data broadcast from the MCU in the row or column direction. The arrangement is described in our earlier application No. 8829622.3 (AMT Case 2003). This least significant bit may be data written into the PE or memory, or a mask used in row or column selection in the response data. For the latter purpose it is oRed with some other input to the multiplexer. The other bits receive 7-bit data common to all other PE's broadcast from the MCU. Thus an eight bit literal value can in general be used as operand.

6. D Register. The one-bit D register on the least significant bit and zero (i.e. no input) on the other bits. The D register is arranged in a conventional fashion to permit data to be shifted into or out of the array at the same time as processing functions are being performed and is not shown in Figure 2.

The row/column response is taken from the least significant bit of the input multiplexer.

## A Register

This functions in a manner similar to that described in the above cited application. The register is loaded from the carryout of the ALU either directly or ANDed ("masked") with the existing A register value. Compatibility with the functions of a conventional single bit array may be provided by generating the appropriate functions for the A register and the carry out of the ls bit of the ALU and masking off the other ALU bits, so that the required value propagates through to the carry output. This arrangement permits also setting activity according to the results of arithmetic tests.

## Activity Select

Activity control can apply to the on-chip memory, the off-chip memory, or the shifting or loading of the Q register. At the level of each individual PE, activity control is identical to the corresponding function described in the above cited patents and applications. It provides options for activity to be equal to A or its inverse or to be controlled on a row or column basis. A further level of masking control may be applied to the individual bits of on chip memory. The set of 8 mask bits is common to all PE's and is AND-ed with the above control. This gives the option of writing to an individual bit of a byte or in general to specify a particular bit field within the byte. The mask pattern is generally the same pattern that is used to control the ALU function unless single bit writes to on-chip memory are done by masking. In the present example, activity can also be set according to the ls bit of the S register. As described below, this helps the implementation of the "multiply" function.

## C Register

This is one bit wide and may be loaded from the carry borrow output of the ALU. It may be used as carry in to the ALU or as a serial shift input for the Q register.

## ALU

As described above, this is now 8 bits wide, taking a selected byte of the operand register means Q and of the input multiplexer data as input and the C register as carry-in.

A variety of functions are provided. To give maximum flexibility of single bit functions the least significant bit has full function units for both sum and carry outputs. For the other bit positions arithmetic add, subtract and reverse subtract are provided, together with copy of either operand, and a variety of bit-by-bit boolean functions.

The ALU has masking features which permit operations on selected bit fields rather than being constrained to byte boundaries. Thus an 8-bit mask, common to all PE's is applied to the ALU and has the following effect:

If mask bit = 1 normal generation of carry out bit

If mask bit = 0 carry out bit = carry in bit for that bit position.

Result bit: If mask bit = 1 the normal result bit function for that bit is provided at the ALU output. If mask bit = 0 the result value is of no interest, so any value convenient to the implementation may be provided.

Masking the ALU operation may be implemented by explicitly gating the carry propagation in the manner described above, but this may preclude the use of standard carry predict techniques for fast operation of the ALU. An alternative is to achieve the masking by forcing one input of the ALU to 1 and the other to 0, for each bit position where the mask bit is 0.

The mask pattern comprises a consecutive set of truebits specified by a start bit and an end bit. This of course allows selection of a single bit. For operations on a complete byte, the start bit is specified as zero and the end bit as 7. For single-bit operations the least significant bit of the ALU is used, so the start and end bits are both specified as 7. Thus, the carry out of the least significant bit is propagated unchanged through the other ALU bits and may be clocked into C.

During multiply the LS bit of the S register acts as a multiplier and may achieve this by selecting the ALU function as either "copy" or "add" dependent on the local value of that bit. There is also provision for local control to distinguish between add and subtract, for such purposes as non-restoring division. The LS bit of the S register may be used to control this function.

## Merge Function

This is the logic that selects the memory output data as either the ALU output or the old memory contents. It is 8 bits wide and each bit has its own activity select but its function is otherwise the same as in the single bit systems disclosed in the above cited patents and applications. The merge function gives an 8 bit path to the on-chip memory and as already noted the off-chip memory path is taken from the least significant bit.

## Neighbour Paths

The neighbour output (not shown in the Figure) needs to be either the least significant bit of a selected byte of the Q register (for shift functions) or the carry- out of the ALU (for ripple add functions). The memory path may be common with the neighbour output. The selected neighbour input may be used instead of the C register as the carry-in to the ALU.

D Plane

As in the systems described in the above cited patents, a D-register forming a data plane for Fast Input-Output operations may be used. The D register can be loaded from memory input, or supplied as data on the memory write path. A single bit D register may be used, linked only to the off-chip memory. If the on-chip memory is operated as a cache then I/O data can be cached and D plane transfers to or from the on-chip memory may then be implemented. In the latter case the D register is 8 bits wide.

Example of PE Usage - Unsigned Integer Multiply

The method for unsigned integer multiplication of 32 bit operands, producing a double length product is given below. For ease of description it is assumed that Q is initially zero. Both operands and the result are in the on-chip memory.
For each byte of multiplier
Load multiplier byte into S.
For each bit of multiplier byte
For each byte of multiplicand
Where LS bit of S
Add ls byte of Q register and multiplicand byte from memory
Elsewhere
Copy Q register to ALU output
Endwhere
C is used as carry-in of the add, except on the first pass of the loop.
Carry out is clocked into C. The Q register is shifted one byte to the right, with the ALU result being brought in at the most significant byte position.
On the last pass of this loop, the Q register is shifted one bit right (as well as one byte)with the ALU carry out brought in at the ms bit. The S register is also shifted one place, with the ls bit of Q shifted into the ms bit of S. This puts one completed result bit into S, aligns Q ready for the next multiplier bit, and discards the multiplier bit just used, bringing the next multiplier bit into the correct position.
End For
End For
Store completed result byte from the S register.
End For
For each byte of ms half of result
Store result byte from the appropriate byte of Q.
End For
The conditional add can either be achieved by controlling the ALU function (as assumed in the description above), or by controlling the byte shifting of Q. Note that in the latter case the shift of one place must be done regardless of the multiplier bit. If the multiplier bit is zero, then the carry bit shifted into the MS end is zeroised.
For 32-bit operands this takes 140 instructions to produce the double length unsigned product. Extra cycles would be needed if the result was to be written under activity control.
In fact this scheme can be applied directly to multipliers of any length, even greater than 32 bits.
If the multiplicand is less than 32 bits then the above code is changed to use a different byte of Q in the addition, and with the bytes in the least significant half of the result being stored from one of the bytes of Q instead of from S.
If the multiplicand is greater than 32 bits, then the above procedure is applied to sections of the multiplicand in turn, each section being of length up to 32 bits. Finally the partial products are added together.

Arbitrary Bit Fields

Operations such as 7 bit addition (for example used in exponent processing for the multiplication of certain formats of real numbers) may be done using masked arithmetic in the ALU. This permits the contents of the C register or zero to be used as carry-in at any bit position, and the carry out from any bit position to be loaded into C. Masking also permits the result to be written to any bit field using a read-merge write sequence similar to that used for normal activity controlled writes.
If the bit field to be combined do not have the same alignment to byte boundaries, then one field can be loaded into the Q register and lined up by successive shifts of one bit before performing the arithmetic operation. Similarly the ALU result could be written back to Q and then aligned to the result space if required, rather than being written direct to memory.

Neighbour Operations

For ripple add, a carry is taken from the output of the ALU and brought in as the carry-in to the ALU of a neighbouring PE. The operands are typically a byte of the Q register and a memory byte. Using masking, the carry may propagate through any bit field within the ALU. The functionality of previous single-bit arrays maybe modelled by selecting C as the operand at the input multiplexer, and masking of all but the least significant bit of the ALU. For neighbour shifts, the neighbour output is taken from the least significant bit of the selected byte of the Q register. The neighbour input comes in at the ALU carry input and the ALU function is such that this value is reproduced at the function output, and thus maybe written back to Q or to A. A variant of this is for the ALU to propagate the carry-in through the carry-out by appropriate function setting on the least significant bit and by masking of the other bits: simultaneously the Q register is shifted one place right with the ALU carry brought in at the ms end. By repeating this operation, any number of bits in the Q register may be shifted to a neighbouring PE at the rate of one bit per PE per cycle.

Memory organisation

External Interface

The PE as described has a one bit path to or from off-chip memory. This obviously gives compatibility with existing implementations, and is certainly needed for operations on boolean matrices. However, the provision of wide data paths within the PE permits data to be re-arranged or mode-converted, as part of the interface with the off-chip memory.

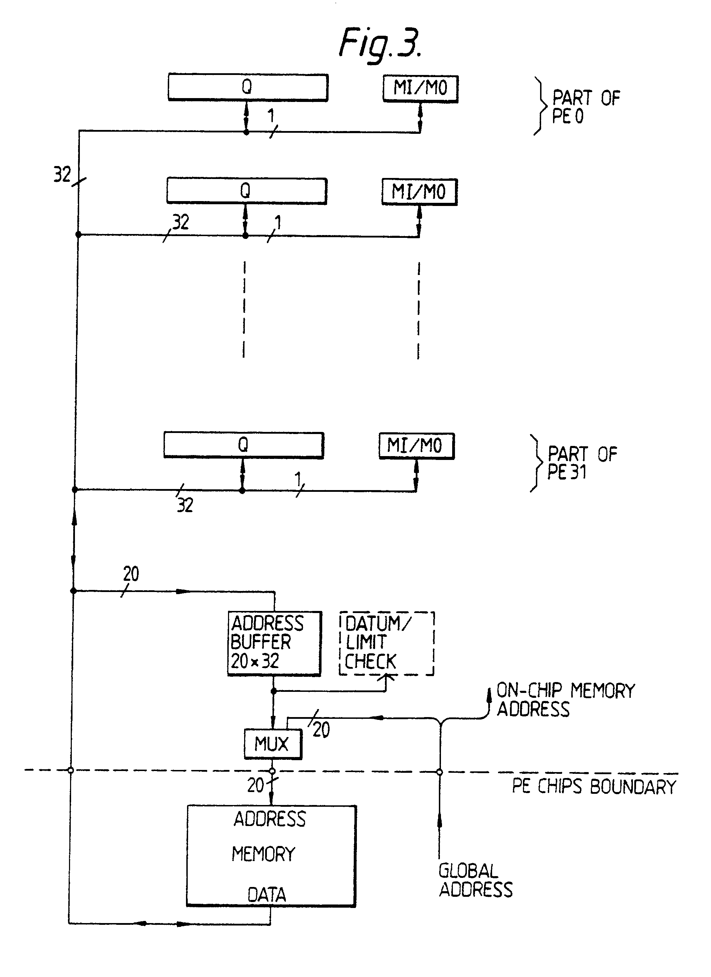

If we put 32 PEs on a chip arranged 32 x 1, then the 32 one-bit paths to or from off chip memory could alternatively be regarded as one 32-bit path. This 32 bit path could, on input, be broadcast to all PEs and loaded into the Q register of a selected PE, repeating the operation to load the other 31 PEs. This scheme is outlined in Figure 3, along with related hardware for local address indexing.

An alternative scheme giving similar overall effect is to configure the Q registers as a 32 x 32 shift plane, so data is successively shifted into or out of the set of Q registers.

Either method necessitates widening the multiplexers at the Q register input.

Either method gives 'corner turning' in transit between the off-chip memory and the PE; as described this is specific to 32-bit data items, but variants to deal with 8 or 16 bit items could be considered too.

The advantages of holding data in off-chip memory in 'horizontal mode' are:-

1. Access from the MCU to an element of a matrix is the same speed as access to a vector element or to a scalar.

2. No mode conversion is needed when data is sent from or returned to the host. Conversion routines should still be called though, since in some cases they are needed to perform format conversions.

The ordering of words in array memory is not necessarily the same as would be natural for a normal memory, but this could be accommodated by including an Address Sequence Engine chip in the host interface similar to that described in the applicant's earlier British patent GB-B-2130409.

3. Again, no mode conversion is needed for I/O systems, but re-ordering at the word (or possibly byte) level is still needed in general, so the current schemes for double buffering and programmable address generation are still highly relevant.

4. When data is being transferred between off-chip memory and on-chip memory varying the sequence of addresses in the off-chip memory effectively re-arranges the data along the row direction during the transfer operation. This re-arrangement only applies within groups of 32 PEs along each row.

5. With word access to off-chip memory, it is possible to provide local indexing, since there is no difficulty in maintaining and checking ECC or parity (dependent on the type of memory). Extra chip pins are needed to output the address, unless these are shared with the data pins (which would take longer for indexed operations).

An on-chip buffer is used to hold 32 addresses (one per PE) for indexed writes; this could either be RAM or shift register. For an indexed write, each PE constructs the address in Q and these are then transferred to the address buffer using the internal memory data paths. Then the data to be written is loaded into Q; and each data word written in turn using the corresponding address from the buffer. Alternatively, the additional on-chip buffer may be used to hold the data, and when local indexing is performed the Q registers are not used. Memory access can then proceed in parallel with processing functions, with some cycles taken from processing to copy the data between the on-chip memory and the buffer register.

As well as the use in certain table lookup operations, local indexing can help with shifting of sheet mapped oversize arrays, for example.

The software may impose the addition of the appropriate datum value and checking of addresses against datum and limit, in which case the local indexing is a system function accessed by a supervisor call. Alternatively this function may be implemented by hardware.

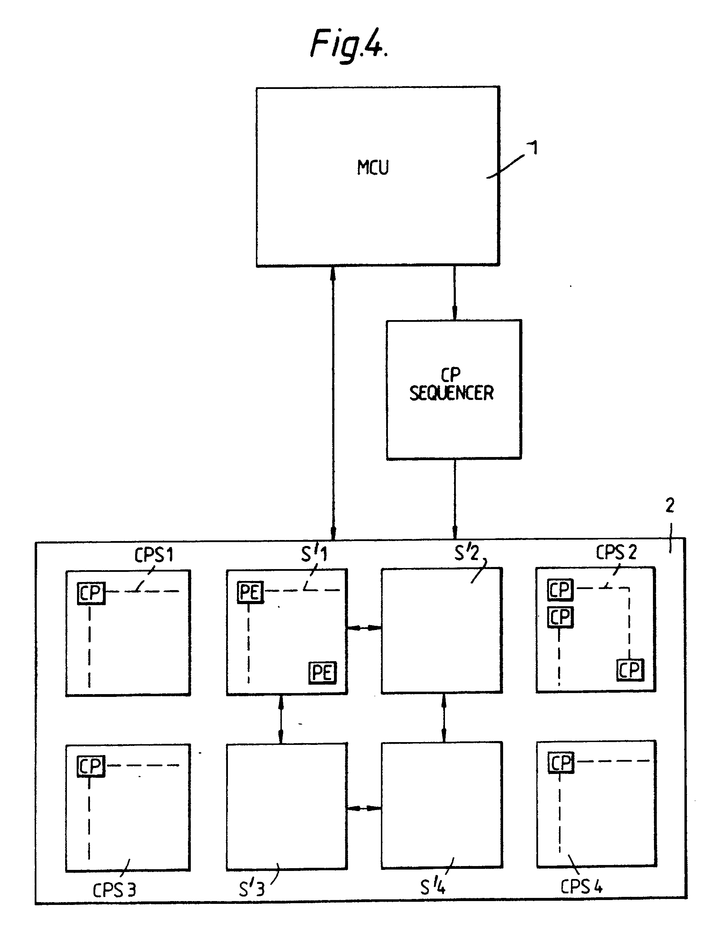

A processing element of the type described above may be used alongside conventional single bit processing elements as a co-processor. Figures 4 and 5 show an alternative embodiment using such an arrangement. One 8-bit processing element (CP) is associated with each single bit processing element (PE) of the array. The 8-bit processing element need not be in physical proximity to the single-bit processing element, and in the example shown the 8-bit processing elements are formed in co-processing subarrays CPS1...CPS4 positioned alongside the sub-arrays of single-bit processing elements. As will be apparent, other physical configurations are also possible.

Both the single-bit processing element and the coprocessor 8-bit elements are controlled by instructions from the MCU. However while the single-bit processing elements obey assembly language (APAL) instructions broadcast directly from the MCU, the operation of the 8-bit processing elements in the co-processing sub-arrays are controlled by instructions in a low level assembly language termed by the present inventors "CPAL". Appendix A lists the full syntax of CPAL. It should be noted that in the present embodiment, the multiplier register is denoted by M and the S register is a separate register for holding data read from memory of the 8-bit PE.

Intrinsic operations from array memory to array memory are implemented either with the 1-bit PEs or the 8-bit PEs, whichever is more appropriate for the particular function being performed. Unlike the single bit PEs, there is no communication between the 8-bit PEs, and their use is accordingly limited to processing functions (rather than data movement) applied to data held vertically in array memory.

Each 8-bit PE of this embodiment is designated by the inventor "CP8". The CP8 has a local memory, in the present example of 32 bytes, which holds operands and results and acts as a workspace for intrinsic functions. Usually the operands for a given intrinsic function are copied from array memory into the CP8 memory, before the CP8 intrinsic function is invoked. The results are copied back again afterwards or alternatively, the results of one operation in the CP8 memory may be used as an operand for the next operation. The copying of data between the array memory and CP8 memory is controlled by special instructions in the main assembly language instruction stream, and are actioned directly by the CP8 hardware. Accordingly the dedicated CPAL code deals only with operations local to the CP8 memory.

A CP8 intrinsic function is started at any entry point as a result of an assembly language instruction and then continues without any branching or looping until an instruction containing a stop field is encountered. Execution of CPAL cannot be interrupted, but if the main assembly language, APAL, invokes a simultaneous copy of data between the CP8 memory and array memory then some instruction cycles are "stolen" automatically to access the CP8 memory.

Other than in the differences in the M and S registers noted above, the arrangement of the internal registers of each CP8 is generally similar to that described in the first embodiment. The names, widths in bits and main functions of the registers are:

Q 32 Accumulator
C 1 Carry
M 8 Merge/Multiply Control
S 8 Memory Read

The CP8 memory is always read or written 8-bits wide and similarly, most but not all operations are 8-bits wide. The Q register effectively functions as four 8-bit registers. In CPAL, byte wide operations are the default mode, apart from the setting and use of the C register. Registers M and S can be used as general purpose registers in addition to their specific functions mentioned above.

Figure 5 shows one CP8. The data paths are mostly one byte wide, with the exception of those associated with the C register and with the array memory pin. The register Q is functionally equivalent to the combination of Q0, Q1 and Q2 in the first embodiment.

The ALU at the heart of the CPA is generally similar to that described in the embodiment above. However, since it is intended for use as a coprocessor alongside single bit processors, most of the single-bit functions described above may be omitted. Also, for simplicity, the bit level masking in the ALU has been omitted. An OR function may be performed under software control at the ALU input to equivalent effect. The merge function on the ALU output operates on complete bytes and it is not possible to merge individual bits. Transfers to and from the main memory external to the chip use a separate register known as D. This operates in a DMA mode, transferring data one bit at a time for each CP8 in parallel, and stealing cycles from the CP8 to transfer each complete byte to or from the CP8 memory. The A register is used only to control writing results to the main memory. All conditional operations within the CP8 are dependent upon the least significant bit of the M register.


## Claims

1. A processor array comprising a plurality of processing elements (PE,CP), each processing element (PE,CP) including a local store, an arithmetic unit (ALU) and operand register means (Q) for the arithmetic unit (ALU), the array employing an SIMD architecture, characterised in that the arithmetic unit (ALU) is a byte-wide processor, and the operand register means (Q) include a multi-byte shift network, data outputs for each byte of the shift network, and a multiplexer (MUX) arranged to communicate data from a selected one of the outputs to the arithmetic unit (ALU).

2: A processor array according to claim 1, in which the operand register means (Q) include a first multi-byte shift network (Q1) arranged to shift data byte-wise from one end to the other, and a second multi-byte shift network (Q2) connected in parallel with the first shift network (Q1) and arranged to shift data bit-wise from one end to the other.

3. A processor array according to claim 2, in which the first shift network. is arranged to receive a byte output from the arithmetic unit (ALU) at the one end and the second shift register is arranged to receive a carry-bit output from the arithmetic unit at the one end and to output data to a multiplier register (S) at the other end.

4. A processor array according to claim 3, in which the operand register means (Q) further comprise an output register (Q0) connected in parallel with the second shift network (Q2), a data output at each byte position of the output register (Q0) being connected in common to a corresponding data input of the first shift network and to an input of the multiplexer.

5. A processor array according to any one of the preceding claims, in which the arithmetic unit (ALU) includes a mask input arranged to receive a mask bit pattern, the arithmetic unit (ALU) operating on a select bit or bits of a byte-wide operand in response to the mask bit pattern.

6. A processor array according to any one of the preceding claims, in which the processing element (PE) includes a byte-wide input for data from local store and a bit-wide input for off-chip memory.

7. A processor array according to any one of the preceding claims, in which the array comprises a number of sub-arrays (S1...S4) each sub-array comprising n processing elements (PE) and having an n-bit path to a sub-array memory.

8. A processor array according to claim 7, in which each sub-array memory is locally indexed.

9. An array according to any one of claims to 4, further comprising an array of single-bit processing elements (CP,PE), the said processing elements (PE,CP) including byte-wide arithmetic units (ALU) being arranged to function as co-processors for corresponding single-bit processing elements (CP,PE).

10. A processo.r array comprising a plurality of single-bit processing elements (PE), the array employing an SIMD architecture, characterised in that the array further comprises a plurality of co-processing elements (CP), one co-processing element (CP) being provided for each processing element (PE) of the array, each processing element and co-processing element addressing a common region of array memory, each co-processing element (CP) including a local store, a byte-wide arithmetic unit (ALU) and operand register means (Q) for the arithmetic unit (ALU).

11. An array according to claim 10, in which the operand register means (Q) include a multi-byte shift network, data outputs for each byte of the shift network, and a multiplexer (MUX) arranged to communicate data from a selected one of the outputs to the arithmetic unit (ALU).

12. A processor array according to claim 10 or 11, further comprising a byte-wide multiplier register (M) connected to hold an operand for the arithmetic unit (ALU), the operand register means (Q) being arranged to shift data held in the operand register means conditionally by one byte, depending upon a value of one or more bits stored in the multiplier register (M).

**Fig.1.**

**Fig.5.**

# Fig.2.

# Fig.3.

| | PART OF PE 0 |
| Q | MI/MO |

32

| Q | MI/MO |

32    1

| Q | MI/MO | PART OF PE 31 |

32

20

ADDRESS
BUFFER
20 × 32

DATUM/
LIMIT
CHECK

ON-CHIP MEMORY
ADDRESS

MUX

20

PE CHIPS BOUNDARY

20

ADDRESS

MEMORY

DATA

GLOBAL
ADDRESS

# Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | IEEE TRANSACTIONS ON COMPUTERS, vol. C-33, no. 4, April 1984, pages 344-350; N.H. CHRIST et al.: "A very fast parallel processor" * Figures 2,4,5; page 344, left-hand column, lines 1-11; page 346, left-hand column, line 51 - page 347, left-hand column, line 6 * | 10 | G 06 F 15/80 |
| A | IDEM | 9 | |
| Y | US-A-4 144 566 (THOMSON-CSF) * Figures 5,6; column 5, lines 65-69; column 6, lines 1-69 * | 1-5 | |
| A | | 11,12 | |
| Y | GB-A-2 180 968 (ELSAG) * Figure 3; page 5, lines 61-65; page 6, lines 1-16 * | 1-5 | |
| A | JOURNAL OF PARALLEL AND DISTRIBUTED COMPUTING, vol. 4, no. 6, December 1987, pages 619-628, Academic Press, Inc., Duluth, MN, US; D. MAKARENKO et al.: "A VLSI multiprecision matrix multiplier and polynomial evaluator" * Figure 1; page 621, lines 9-15 * | 2,11,12 | TECHNICAL FIELDS SEARCHED (Int. Cl.5) G 06 F 15 |

The present search report has been drawn up for all claims

| Place of search | Date of completion of the search | Examiner |
|---|---|---|
| THE HAGUE | 12-02-1991 | SCHENKELS P.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document